(19) Europäisches Patentamt / European Patent Office / Office européen des brevets

(11) **EP 2 355 025 A1**

(12) **DEMANDE DE BREVET EUROPEEN**

(43) Date de publication:
**10.08.2011 Bulletin 2011/32**

(51) Int Cl.:
*G06Q 10/00* (2006.01)  *G06Q 30/00* (2006.01)

(21) Numéro de dépôt: **11152748.7**

(22) Date de dépôt: **31.01.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **01.02.2010 FR 1050673**

(71) Demandeur: **Electricité de France**
**75008 Paris (FR)**

(72) Inventeurs:
• **Delalonde, Charles**
  **94250 Gentilly (FR)**
• **Delasalle-Semblat, Catherine**
  **92140 Clamart (FR)**
• **Rouilly, Stéphane**
  **75013 Paris (FR)**

(74) Mandataire: **Texier, Christian et al**
**Cabinet Régimbeau**
**20, rue de Chazelles**
**75847 Paris Cedex 17 (FR)**

(54) **Procédé d'évaluation d'un appareil ou d'un bâtiment destiné à être raccordé à un réseau de distribution d'énergie et application pour terminal mobile associée**

(57)  L'invention concerne un procédé d'évaluation d'un appareil ou d'un bâtiment destiné à être raccordé à un réseau de distribution d'énergie, à partir d'un terminal utilisateur, comprenant des étapes de :
- générer une image associée à l'appareil ou au bâtiment à évaluer,
- traiter l'image générée pour extraire des données relatives à l'appareil ou au bâtiment,
- estimer une valeur de consommation énergétique de l'appareil ou du bâtiment, à partir d'une part des données extraites, et d'autre part de données personnelles associées à un abonné du réseau de distribution d'énergie, et
- afficher sur un écran du terminal utilisateur la valeur de consommation estimée.

**FIG. 1**

EP 2 355 025 A1

**EP 2 355 025 A1**

**Description**

**DOMAINE DE L'INVENTION**

L'invention concerne un procédé d'évaluation d'un appareil ou d'un bâtiment destiné à être raccordé à un réseau de distribution d'énergie, ainsi qu'une application pour terminal mobile associée.

**ETAT DE LA TECHNIQUE**

Devant la multiplicité de l'offre d'appareils électroménagers ou d'équipements, il devient désormais difficile pour les consommateurs de choisir l'appareil électroménager ou l'équipement qui leur convient.

Pour permettre aux consommateurs de comparer les différents appareils domestiques, la directive *92/75/CEE* du Conseil du 22 septembre 1992 impose de marquer les appareils domestiques d'une « étiquette-énergie », présentant un format prédéfini et indiquant la consommation de l'appareil en énergie et en autres ressources. Les informations mentionnées sur une étiquette-énergie comprennent notamment les références complètes de l'appareil (incluant le modèle et le fabricant), une catégorie d'efficacité énergétique de l'appareil, une valeur de consommation énergétique en kWh/an, une efficacité et/ou une capacité, un niveau de bruit généré par l'appareil en décibels. Les étiquettes-énergie permettent aux consommateurs d'avoir accès à des informations uniformes pour l'ensemble des appareils de même type et par conséquent, de pouvoir comparer entre eux ces appareils de manière objective.

Cependant, malgré la présence de ces étiquettes-énergie, les consommateurs éprouvent souvent des difficultés pour mémoriser les différentes informations qui leur sont présentées afin de pouvoir comparer entre eux les appareils proposés.

En outre, les données figurant sur les étiquettes-énergie sont des données moyennes, qui ne tiennent pas compte des habitudes particulières de l'utilisateur de l'appareil.

Par ailleurs, les informations, telles qu'elles figurent sur les étiquettes-énergie, ne sont parfois pas suffisantes pour clairement inciter les consommateurs à modifier leurs habitudes pour réduire l'énergie consommée ou à choisir des appareils de faible consommation énergétique.

La directive *2002/91/CE* du Parlement européen et du Conseil du 16 décembre 2002 sur la performance énergétique des bâtiments a également donné lieu au marquage des bâtiments par une « étiquette-énergie » analogue à celle en usage pour les équipements électroménagers et par une « étiquette-climat ».

**PRESENTATION DE L'INVENTION**

Un but de l'invention est d'offrir à un abonné d'un réseau de distribution d'énergie une aide à la décision en situation d'achat.

Ce problème est résolu dans le cadre de la présente invention grâce à un procédé d'évaluation d'un appareil ou d'un bâtiment destiné à être raccordé à un réseau de distribution d'énergie, à partir d'un terminal utilisateur, comprenant des étapes de :

générer une image associée à l'appareil ou au bâtiment à évaluer, traiter l'image générée pour extraire des données relatives à l'appareil ou au bâtiment,
estimer une valeur de consommation énergétique de l'appareil ou du bâtiment, à partir d'une part des données extraites, et d'autre part de données personnelles associées à un abonné du réseau de distribution d'énergie, et afficher sur un écran du terminal utilisateur la valeur de consommation estimée.

Le procédé permet par exemple à un utilisateur de prendre une photo d'une étiquette qui est associée à l'appareil ou au bâtiment et d'obtenir en retour sur son terminal mobile une évaluation personnalisée concernant la consommation énergétique de l'appareil ou du bâtiment.

Outre qu'il permet d'aider l'utilisateur dans son choix, le procédé sensibilise l'utilisateur à l'appréciation des niveaux de consommation des appareils électroménagers.

Le procédé peut présenter les caractéristiques suivantes :

- l'image associée à l'appareil ou au bâtiment est une image d'une étiquette associée à l'appareil et les données relatives à l'appareil ou au bâtiment sont les données figurant sur l'étiquette,
- le terminal utilisateur est un terminal mobile muni d'un dispositif de prise d'image, le procédé comprenant une étape de :

  activer le dispositif de prise d'image du terminal mobile pour générer une image d'une étiquette associée à

EP 2 355 025 A1

l'appareil ou au bâtiment,

- les données extraites comprennent un type d'appareil, un nom de fabricant de l'appareil, un identifiant du modèle de l'appareil, une catégorie d'efficacité énergétique de l'appareil ou du bâtiment ou une valeur moyenne de consommation énergétique de l'appareil ou du bâtiment,
- les données personnelles associées à l'abonné du réseau de distribution d'énergie comprennent un type d'abonnement auquel l'abonné a souscrit ou une fréquence d'utilisation de l'appareil,
- l'appareil étant un appareil destiné à fonctionner par intermittence, l'étape d'estimation de la valeur de consommation énergétique de l'appareil comprend le calcul d'un coût de consommation global par an P sous la forme :

$$P = n \times p \times \frac{52}{100}$$

où P est le coût de consommation estimé par an, n est un nombre de cycles de fonctionnement de l'appareil par semaine effectué par l'abonné, et p est un coût de consommation estimé par cycle,
- le coût de consommation estimé par cycle p est sous la forme :

$$p = c \times \left( \frac{8}{24} \times p_1 + \frac{16}{24} \times p_2 \right)$$

où $p$ est le coût de consommation estimé par cycle, c est la consommation de l'appareil par cycle mentionnée sur l'étiquette, $P_1$ est le prix de l'énergie en heures creuses et $p_2$ est le prix de l'énergie en heures pleines,
- l'appareil étant un appareil destiné à fonctionner en permanence, l'étape d'estimation de la valeur de consommation énergétique de l'appareil comprend le calcul d'un coût de consommation global par an P sous la forme :

$$P = C \times \left( \frac{8}{24} \times p_1 + \frac{16}{24} \times p_2 \right)$$

où P est le coût de consommation estimé par an en euros, C est la consommation par an mentionnée sur l'étiquette, $P_1$ est le prix de l'énergie en heures creuses et $P_2$ est le prix de l'énergie en heures pleines,
- le procédé comprend une étape de :

  afficher simultanément sur un écran du terminal mobile des valeurs de consommation énergétique estimées pour plusieurs appareils.

- l'étape d'affichage consiste à afficher une page de comparaison incluant un tableau présentant un ou plusieurs critères et une valeur de consommation énergétique associés à chaque appareil, chaque critère pouvant être sélectionné ou désélectionné par l'utilisateur pour être affiché ou masqué dans le tableau,
- le procédé comprend une étape de :

  dans le cas où il est impossible d'extraire des données relatives à l'appareil ou au bâtiment à partir d'une image associée à l'appareil, saisir manuellement des données relatives à l'appareil ou au bâtiment,

- le procédé comprend des étapes de :

  estimer une quantité de dioxyde de carbone émise du fait du fonctionnement de l'appareil ou de l'occupation du bâtiment en fonction de la valeur de consommation énergétique de l'appareil ou du bâtiment,
  afficher sur l'écran du terminal utilisateur la quantité estimée.

- le procédé comprend une étape de :

afficher sur l'écran du terminal utilisateur des informations recommandant un ou plusieurs appareil(s) présentant une consommation énergétique plus faible que la valeur de consommation énergétique de l'appareil évalué,
- les données extraites comprennent une catégorie d'efficacité énergétique du bâtiment, une valeur de consommation énergétique du bâtiment, une catégorie d'émission de gaz à effet de serre et/ou une valeur d'émission de gaz à effet de serre par le bâtiment,
- l'étape d'estimation de la valeur de consommation énergétique du bâtiment comprend le calcul d'un coût de consommation global par an P sous la forme :

$$P = C \times p \times S$$

où P est le coût de consommation estimé par an en euros, C est une consommation par an par unité de surface, p est le prix de l'énergie et S est une surface du bâtiment,
- l'étape d'estimation de la valeur de consommation énergétique du bâtiment comprend le calcul d'un coût de consommation global par an P sous la forme :

$$P = C \times \left( \frac{8}{24} \times p_1 + \frac{16}{24} \times p_2 \right) \times S$$

où P est le coût de consommation estimé par an en euros, C est une consommation par an par unité de surface, $P_1$ est le prix de l'énergie en heures creuses, $p_2$ est le prix de l'énergie en heures pleines et S est une surface du bâtiment,
- le procédé comprend une étape selon laquelle l'utilisateur saisit une valeur de surface du bâtiment.

L'invention concerne également une application d'évaluation adaptée pour être chargée dans la mémoire d'un terminal mobile, pour la mise en oeuvre du procédé défini précédemment, l'application étant apte à exécuter automatiquement des étapes de :

estimer une valeur de consommation énergétique d'un appareil ou d'un bâtiment destiné à être raccordé à un réseau de distribution d'énergie, à partir d'une part de données relatives à l'appareil ou au bâtiment, et d'autre part de données personnelles associées à un abonné du réseau de distribution d'énergie, et
afficher sur un écran du terminal mobile la valeur de consommation estimée.

L'application peut en outre être apte à exécuter automatiquement des étapes de :

transmettre à un serveur de traitement distant des données d'image représentatives d'une étiquette associée à l'appareil ou au bâtiment, et
recevoir de la part du serveur les données figurant sur l'étiquette.

L'invention concerne également un serveur d'évaluation pour la mise en oeuvre du procédé défini précédemment, programmé pour exécuter automatiquement des étapes de :

recevoir de la part d'un terminal mobile des données d'image associée à un appareil ou au bâtiment destiné à être raccordé à un réseau de distribution d'énergie,
extraire à partir des données d'image des données relatives à l'appareil ou au bâtiment, et
renvoyer au terminal mobile les données extraites.

## PRESENTATION DES FIGURES

D'autres caractéristiques et avantages ressortiront encore de la description qui suit, laquelle est purement illustrative et non limitative et doit être lue en regard des figures annexées parmi lesquelles :

- la figure 1 est un diagramme représentant de manière schématique des équipements intervenants dans la mise en oeuvre d'un procédé d'évaluation d'un appareil électroménager conforme à un mode de réalisation de l'invention,
- la figure 2 est un diagramme représentant de manière schématique des étapes du procédé d'évaluation,

- les figures 3 à 8 et 10 à 21 représentent de manière schématique des pages affichées sur un écran d'un terminal utilisateur,
- la figure 9 représente de manière schématique des étapes de traitement exécutées par une application d'évaluation mise en oeuvre par le terminal utilisateur,
- la figure 22 représente de manière schématique une étiquette-énergie d'un appareil électroménager,
- les figures 23 et 24 représentent de manière schématique des images modèles utilisées comme formes de référence pour traiter des données d'image afin d'extraire des informations figurant sur l'étiquette,
- la figure 25 représente de manière schématique des étapes de traitement exécutées par une application d'évaluation mise en oeuvre par le terminal utilisateur,
- les figures 26 et 27 représentent de manière schématique une étiquette-énergie et une étiquette-climat d'un bâtiment.

## DESCRIPTION DETAILLEE D'UN MODE DE REALISATION

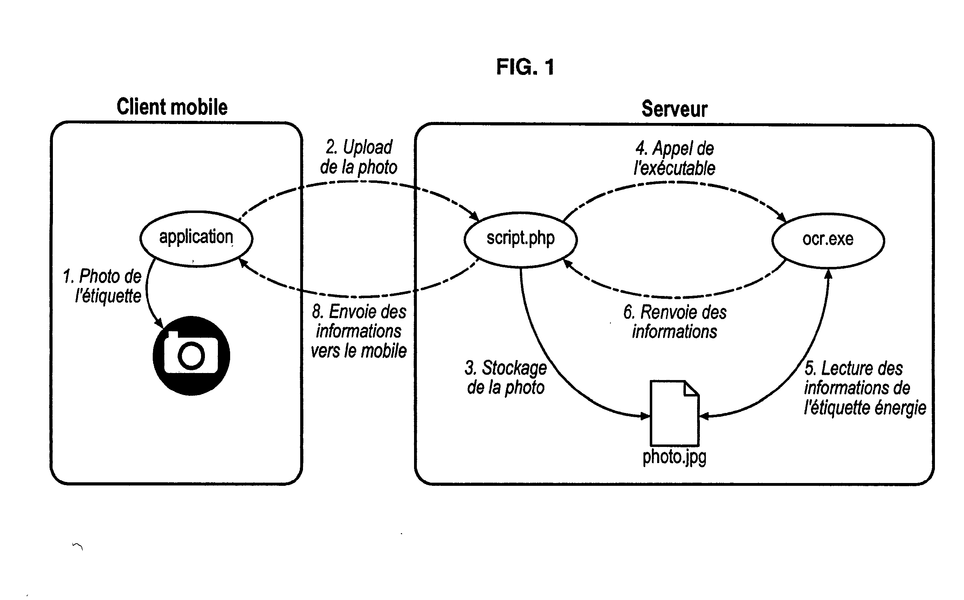

La figure 1 est un diagramme représentant de manière schématique des équipements intervenants dans la mise en oeuvre du procédé d'évaluation conforme à un mode de réalisation de l'invention.

Les équipements intervenants comprennent d'une part un terminal utilisateur et d'autre part un serveur distant.

Le terminal utilisateur est par exemple un téléphone mobile ou un assistant personnel (PDA) incluant un appareil photo numérique intégré. En outre, le terminal utilisateur est programmé avec une application d'évaluation spécifique. L'application d'évaluation peut être présente initialement dans le terminal utilisateur ou être téléchargée par l'utilisateur puis installée dans le terminal utilisateur.

Lors de l'exécution de l'application d'évaluation, le terminal utilisateur est apte à échanger des données avec le serveur distant par l'intermédiaire d'un réseau de communication, tel qu'un réseau de téléphonie mobile par exemple.

Le serveur est adapté pour recevoir des données de la part du terminal utilisateur, traiter les données qu'il reçoit et renvoyer en réponse des information d'évaluation au terminal.

Le serveur contient une première application dénommée « script.php » de communication permettant au serveur d'échanger des données avec le terminal utilisateur et une deuxième application dénommée « ocr.exe » de traitement des données. L'application ocr.exe permet d'extraire à partir de données d'image des informations contenues dans l'image par reconnaissance optique de caractères (OCR).

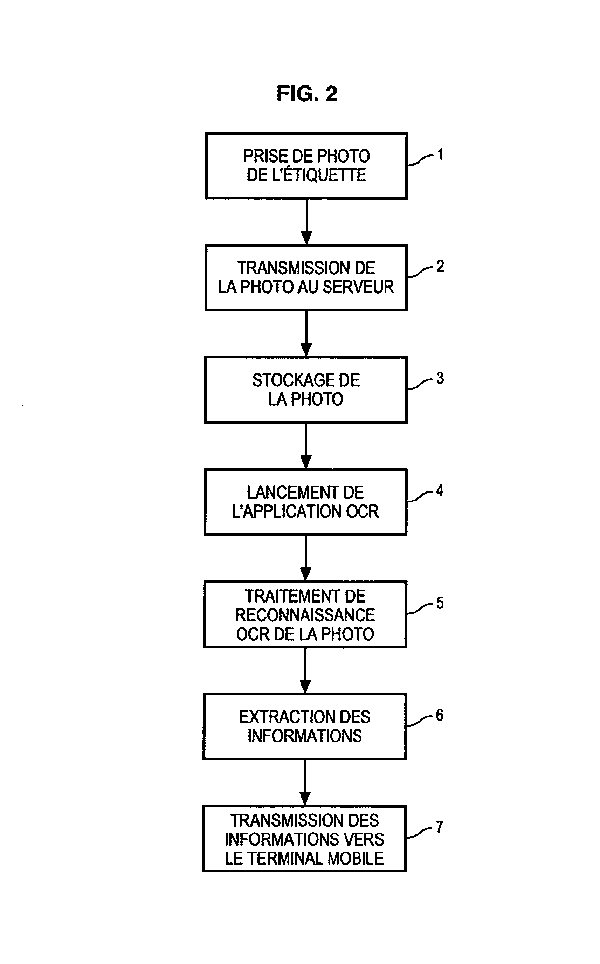

La figure 2 est un diagramme représentant de manière schématique des étapes du procédé d'évaluation.

On suppose que l'utilisateur a commandé le démarrage de l'application d'évaluation dans le terminal.

Selon une première étape 1, l'utilisateur utilise le terminal pour prendre une photo d'une étiquette-énergie figurant sur un appareil électroménager ou sur un bâtiment. L'appareil photo du terminal génère une photo de l'étiquette-énergie sous la forme de données d'image.

Selon une deuxième étape 2, l'application commande la transmission des données d'image vers le serveur pour traitement. Cette étape de transmission peut être réalisée par l'envoi d'un message MMS (Multimedia Messaging Service) contenant les données d'image.

Selon une troisième étape 3, l'application de communication reçoit les données d'image et les enregistre temporairement dans un espace mémoire du serveur. Les données d'image sont enregistrées sous la forme d'un fichier dénommé « photo.jpg ».

Selon une quatrième étape 4, l'application de communication déclenche le démarrage de l'application de traitement.

Selon une cinquième étape 5, l'application de traitement traite les données d'image photo.jpg contenues dans l'espace mémoire afin d'extraire des informations figurant sur l'étiquette-énergie. Plus précisément, l'application de traitement applique un traitement OCR aux données d'image afin de déterminer certaines informations concernant l'appareil électroménager ou le bâtiment.

Dans le cas d'un appareil électroménager, les informations incluent un type d'appareil (réfrigérateur, four, lave-linge, lave-vaisselle, etc), un nom de fabricant de l'appareil, un identifiant du modèle de l'appareil, une catégorie d'efficacité énergétique de l'appareil (de A++ à G) et une valeur de consommation énergétique de l'appareil (en kWh/an).

Dans le cas d'un bâtiment, les informations incluent une valeur de consommation énergétique du bâtiment (en $kWh_{EP}/m^2.an$) et éventuellement une valeur d'émission de gaz à effet de serre (en $kg_{éqCO2}/m2.an$).

Selon une sixième étape 6, l'application de traitement transmet les informations extraites à l'application de communication sous la forme d'un fichier texte dénommé « output.txt ».

Selon une septième étape 7, l'application de communication transmet les informations extraites au terminal utilisateur. Les informations peuvent être transmises par le serveur au terminal utilisateur sous la forme d'une page html.

Selon une huitième étape 8, le terminal utilisateur traite les informations extraites et affiche sur un écran du terminal utilisateur des données d'évaluation relatives à l'appareil électroménager ou au bâtiment.

EVALUATION D'UN APPAREIL ELECTROMENAGER

Démarrage de l'application d'évaluation dans le terminal utilisateur

L'utilisateur peut lancer le démarrage de l'application d'évaluation contenu dans son terminal en sélectionnant une icône appropriée correspondant à cette application dans un menu du terminal.

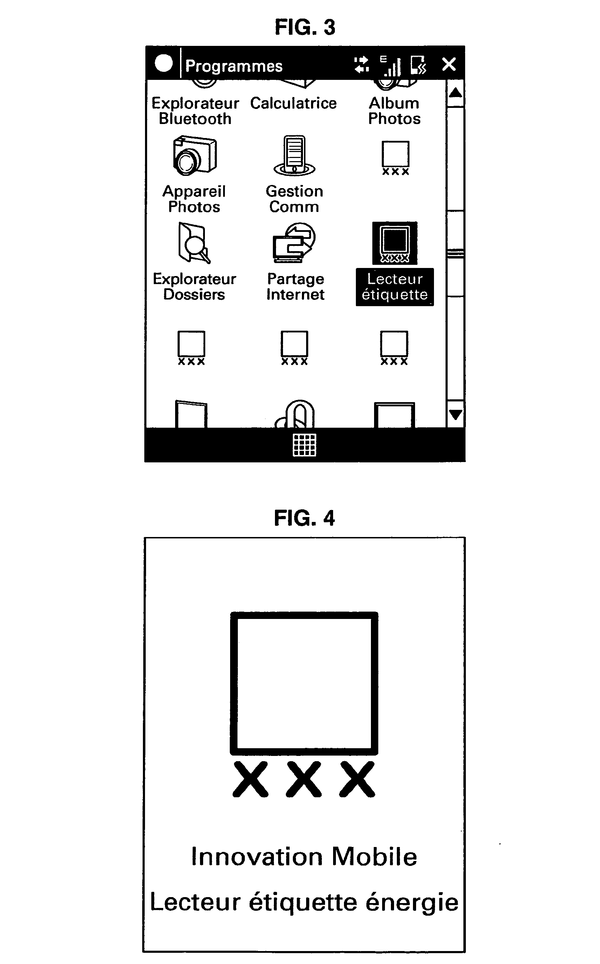

La figure 3 représente de manière schématique un exemple de menu affiché sur l'écran du terminal. Le menu est constitué d'un ensemble d'icônes aptes à être sélectionnées par l'utilisateur, parmi lesquelles figure l'icône « lecture étiquette » correspondant à l'application d'évaluation recherchée.

Lorsque l'utilisateur lance le démarrage de l'application, l'application affiche d'abord une page de démarrage (appelée « splash screen ») représentée sur la figure 4 pendant le chargement des ressources de l'application. La page de démarrage disparait automatiquement après que les ressources ont été chargées.

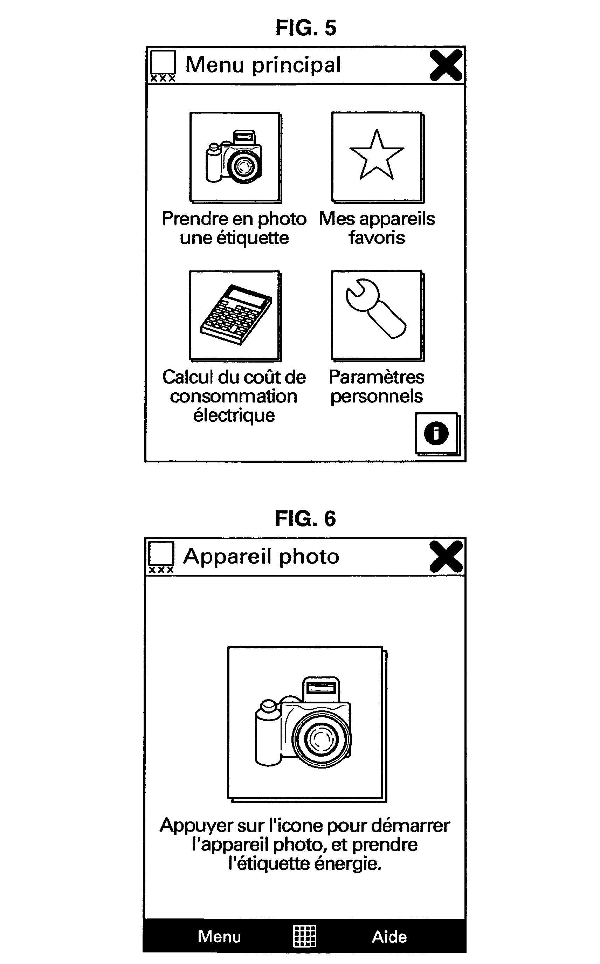

L'application affiche ensuite une page de menu principal représentée sur la figure 5 permettant d'accéder rapidement aux principales fonctionnalités de l'application. Le menu principal contient quatre propositions pouvant être sélectionnées par l'utilisateur et correspondant chacune à une fonctionnalité de l'application d'évaluation. Ces fonctionnalités principales sont les suivantes :

- « Prendre en photo une étiquette »
- « Mes appareils favoris »
- « Calcul du coût de consommation électrique »
- « Paramètres personnels »

Première fonctionnalité : « Prendre en photo une étiquette »

Cette fonctionnalité permet à l'utilisateur de prendre une photo d'une étiquette-énergie figurant sur un appareil électroménager à l'aide de son terminal, et d'obtenir en retour de manière automatique des informations d'évaluation de l'appareil.

Lorsque l'utilisateur sélectionne la fonctionnalité « Prendre en photo une étiquette », l'application d'évaluation commande l'affichage d'une page de garde représentée sur la figure 6. Cette page de garde contient un message indiquant à l'utilisateur qu'il doit sélectionner une icône pour démarrer l'appareil photo et prendre une photo de l'étiquette-énergie.

La sélection de l'icône déclenche le lancement de l'appareil photo du terminal.

L'utilisateur manipule le terminal pour prendre une photo de l'étiquette-énergie. L'appareil photo génère un fichier contenant des données d'image.

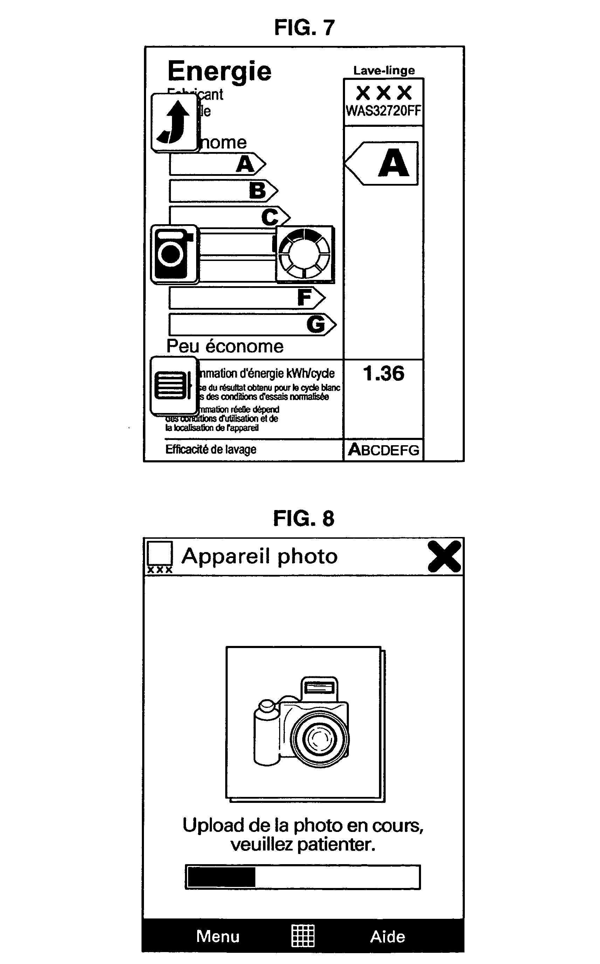

Une fois la photo prise, l'application d'évaluation affiche sur l'écran du terminal une page représentée sur la figure 7. La page affichée inclut une vue de l'image représentant l'étiquette-énergie et une icône représentant une flèche de retour.

Lorsque l'utilisateur sélectionne l'icône représentant une flèche de retour, l'application d'évaluation déclenche la transmission des données d'image du terminal utilisateur vers le serveur d'évaluation. Pendant cette étape de transmission, l'application d'évaluation affiche une page d'attente telle que représentée sur la figure 8.

Le serveur d'évaluation traite les données d'image pour en extraire des informations relatives à l'appareil et renvoie au terminal ces informations. Parmi les informations renvoyées au terminal utilisateur, figurent les informations suivantes :

- un type d'appareil (réfrigérateur, four, lave-linge, lave-vaisselle, etc),
- un nom du fabricant de l'appareil,
- un identifiant du modèle de l'appareil,
- une catégorie d'efficacité énergétique de l'appareil (catégorie A à G), et
- une valeur de consommation énergétique de l'appareil.

Les informations sont renvoyées au terminal utilisateur sous la forme d'un fichier html dans un format préétabli facilement décomposable.

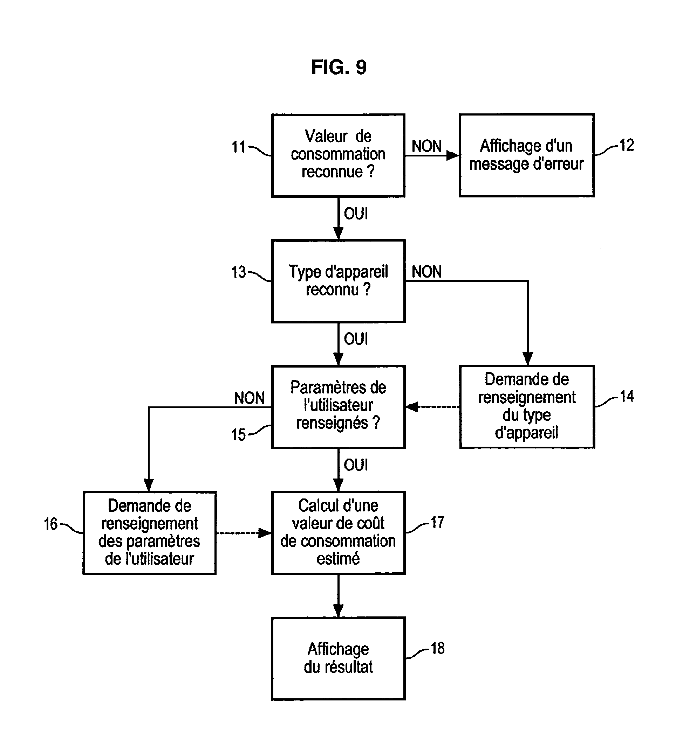

L'application d'évaluation applique alors aux informations reçues des étapes de traitement représentées sur la figure 9.

Selon une première étape 11, l'application détermine si une information de valeur de consommation énergétique de l'appareil figure dans le fichier.

Si ce n'est pas le cas, selon une deuxième étape 12, l'application commande l'affichage par le terminal d'un message d'erreur.

**EP 2 355 025 A1**

Sinon, selon une troisième étape 13, l'application détermine si une information de type d'appareil figure dans le fichier.

Si ce n'est pas le cas, selon une quatrième étape 14, l'application demande à l'utilisateur de saisir manuellement le type d'appareil concerné.

Sinon, selon une cinquième étape 15, l'application détermine si des paramètres personnels de l'utilisateur ont été enregistrés dans le terminal.

Si ce n'est pas le cas, selon une sixième étape 16, l'application demande à l'utilisateur de saisir des paramètres personnels, destinés à permettre de calculer la consommation de l'utilisateur.

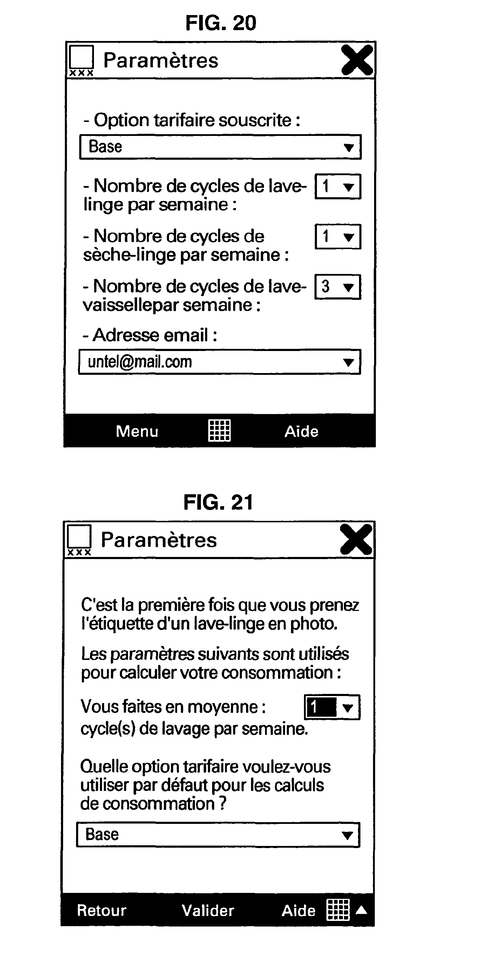

Comme cela apparaît sur les figures 20 et 21, ces paramètres comprennent :

- le type d'abonnement auquel l'utilisateur a souscrit auprès d'un fournisseur d'énergie,
- la fréquence d'utilisation de certains appareils électroménagers fonctionnant par cycles (nombre de cycles de lave-linge, du sèche-linge, du lave-vaisselle par semaine),
- des coordonnées de l'utilisateur (par exemple une adresse email),
- le tarif pris en compte pour le calcul d'évaluation (ce tarif pouvant correspondre à l'abonnement auquel l'utilisateur a souscrit).

Si ces paramètres personnels ont déjà été renseignés, selon une septième étape 17, l'application calcule une valeur estimée du coût de consommation énergétique de l'appareil. La valeur estimée dépend d'une part des informations extraites des données d'image (informations renvoyées par le serveur) et des paramètres personnels de l'utilisateur.

Selon une huitième étape 18, l'application commande l'affichage sur l'écran du terminal d'une page récapitulative des données associées à l'appareil électroménager.

Lors de l'étape 17 de calcul, l'application distingue deux types d'appareils :

- les appareil ayant une consommation par cycle de fonctionnement, et
- les appareils ayant une consommation annuelle.

*Cas d'un appareil ayant une consommation par cycle de fonctionnement*

Il s'agit des appareils qui fonctionnent par intermittence, tels qu'un lave-linge, un sèche-linge ou un lave-vaisselle par exemple.

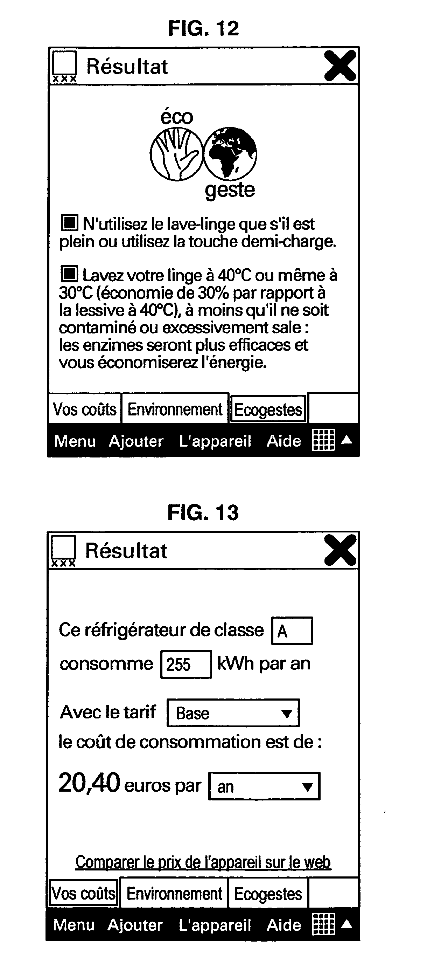

Comme cela est représenté sur les figures 13 à 15, la page récapitulative affichée comprend trois onglets intitulés :

- « Vos coûts »
- « Environnement »
- « Ecogestes »

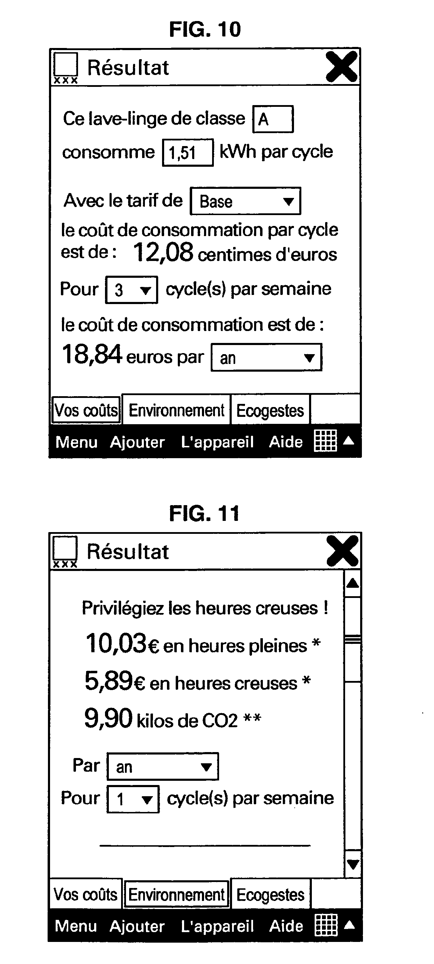

Le premier onglet «Vos coûts » (figure 10) contient des informations figurant sur l'étiquette-énergie de l'appareil, parmi lesquelles figure la consommation électrique de l'appareil par cycle.

L'application calcule en premier lieu un coût de consommation par cycle en fonction d'une option tarifaire choisie par l'utilisateur (tarif de base ou tarif en heures creuses).

Pour le calcul avec l'option tarifaire « heures creuses », l'application calcule une consommation moyenne par cycle p en considérant que la journée de 24 heures comporte 8 heures creuses et 16 heures pleines.

$$p = c \times \left( \frac{8}{24} \times p_1 + \frac{16}{24} \times p_2 \right)$$

où p est le coût de consommation estimé par cycle, c est la consommation par cycle, $P_1$ est le prix de l'énergie en heures creuses et $P_2$ est le prix de l'énergie en heures pleines.

L'application calcule en deuxième lieu, à partir du coût de consommation par cycle p et du nombre de cycles par semaine n, un coût de consommation globale par an, par mois, ou par semaine. Le coût de consommation par an est calculé de la manière suivante :

7

$$P = n \times p \times \frac{52}{100}$$

où P est le coût de consommation estimé par an en euros, n est le nombre de cycles de fonctionnement de l'appareil par semaine, et p est le coût de consommation estimé par cycle en centimes d'euro.

Le deuxième onglet « Environnement » (figure 11) contient des valeurs estimées de coûts de consommation pour une période donnée (année, mois ou semaine) respectivement pour des consommations uniquement en heures pleines et uniquement en heures creuses. L'affichage de ces coûts estimés vise à inciter l'utilisateur à faire fonctionner l'appareil aux heures creuses.

Le deuxième onglet contient également une estimation e d'une quantité de dioxyde de carbone ($CO_2$) émise du fait du fonctionnement de l'appareil au cours de la période donnée.

$$e = n \times c \times i \times 52$$

où e est la quantité de $CO_2$ émise pour une période d'un an, n est le nombre de cycles de fonctionnement de l'appareil par semaine, c est la consommation par cycle, et i est un indicateur de contenu en $CO_2$ de l'électricité consommée en France fourni par l'ADEME (Agence De l'Environnement et de la Maîtrise de l'Energie) et EDF (Electricité de France).

| Type d'appareil | Indicateur $i$ (valeur moyenne en grammes de $CO_2$ par $kWh_e$) |
|---|---|
| Chauffage + pompe de circulation | 180 |
| Eclairage résidentiel | 116 |
| Eclairage tertiaire | 80 |
| Eclairage publique et industriel | 109 |
| Usages résidentiels : cuisson | 82 |
| Usages résidentiels : lavage | 79 |
| Usages résidentiels : produits bruns | 62 |
| Usages tertiaires : autres | 52 |
| Usages industriels (hors éclairage) | 55 |
| Usages résidentiels : ECS | 40 |
| Usages résidentiels : froid | 40 |
| Usages résidentiels : autres | 39 |
| Usages tertiaires : climatisation | 37 |
| Agriculture - transport | 38 |
| Autres (BTP, recherche, armée, etc.) | 35 |

Le deuxième onglet « Environnement » contient également un lien vers le site www.guide-topten.com ainsi que vers les offres de travaux EDF. Le site topten, soutenu par l'ONG WWF France et l'ADEME, contient une liste d'appareils électroménagers recommandés pour leur faible consommation électrique. L'offre de conseils EDF est proposée car l'utilisateur peut se trouver en situation de déménagement ou de travaux. Des conseils pour économiser de l'énergie dans son habitat lui sont alors prodigués à travers l'offre.

Le troisième onglet « Ecogestes » (Figure 12) contient des recommandations relatives au type d'appareil électroménager afin d'économiser l'énergie électrique. Un système de roulement permet d'afficher des recommandations différentes à chaque consultation.

Enfin, dans la barre d'outils située dans la zone inférieure de la page, la page contient une proposition qui peut être activée par l'utilisateur pour ajouter l'appareil évalué en tant que favori dans une liste d'appareils favoris sauvegardée dans un espace mémoire du terminal. Cette liste d'appareils favoris pourra être utilisée ultérieurement afin de comparer les appareils entre eux.

*Cas d'un appareil ayant une consommation annuelle*

Il s'agit des appareils qui fonctionnent en permanence, tels qu'un réfrigérateur par exemple.

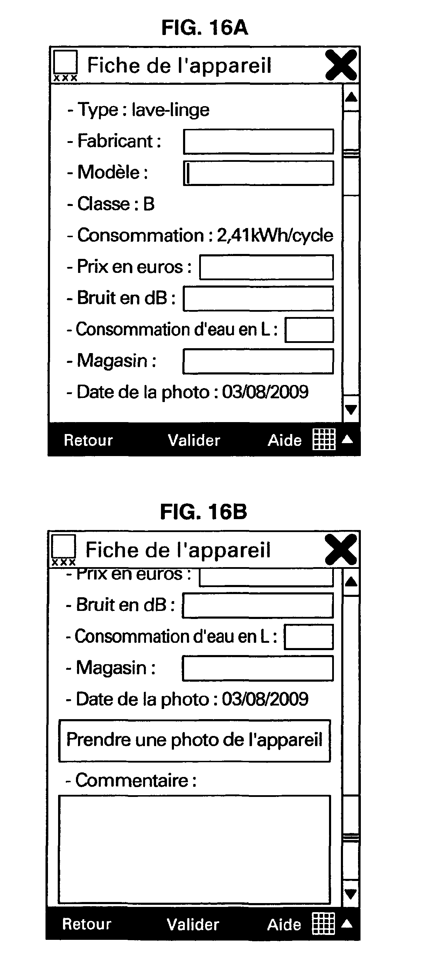

Comme cela est représenté sur les figures 16 à 18, la page récapitulative comprend trois onglets intitulés :

- « Vos coûts »
- « Environnement »
- « Ecogestes »

Le premier onglet «Vos coûts » (figure 13) contient des informations figurant sur l'étiquette-énergie de l'appareil, parmi lesquelles figure la consommation électrique de l'appareil par an.

L'application calcule un coût de consommation par an en considérant qu'une journée de 24 heures comporte 8 heures creuses et 16 heures pleines.

$$P = C \times \left( \frac{8}{24} \times p_1 + \frac{16}{24} \times p_2 \right)$$

où P est le coût de consommation estimé par an en euros, C est la consommation par an, $P_1$ est le prix de l'énergie en heures creuses et $p_2$ est le prix de l'énergie en heures pleines.

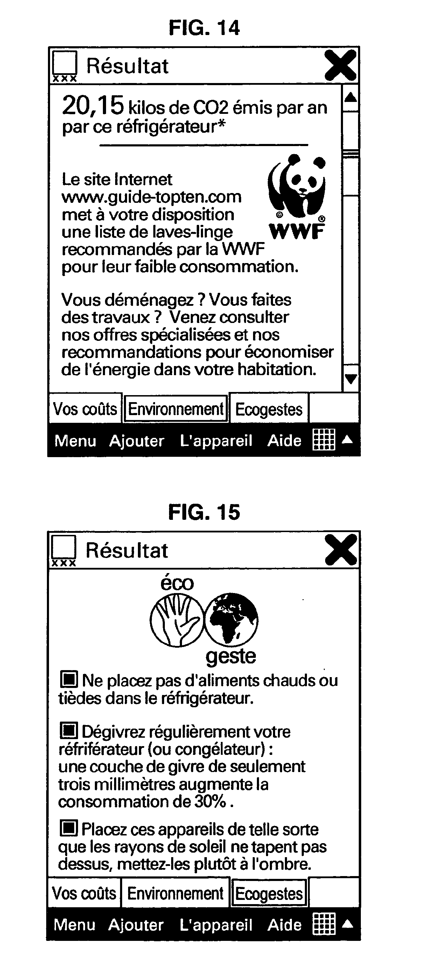

Le deuxième onglet « Environnement » (figure 14) contient une estimation e d'une quantité de dioxyde de carbone ($CO_2$) émise du fait du fonctionnement de l'appareil au cours d'une année.

$e = C \times i$

où e est la quantité de $CO_2$ émise pour une période d'un an, C est la consommation par an, et i est un indicateur de contenu en $CO_2$ de l'électricité consommée en France fourni par l'ADEME (Agence De l'Environnement et de la Maîtrise de l'Energie) et EDF (Electricité de France).

Le deuxième onglet « Environnement » contient également un lien vers le site www.guide-topten.com ainsi que vers les offres de travaux EDF. Le site topten, soutenu par l'ONG WWF France et l'ADEME, contient une liste d'appareils électroménagers recommandés pour leur faible consommation électrique. L'offre de conseils EDF est proposée car l'utilisateur peut se trouver en situation de déménagement ou de travaux. Des conseils pour économiser de l'énergie dans son habitat lui sont alors prodigués à travers l'offre.

Le troisième onglet « Ecogestes » (Figure 15) contient des recommandations relatives au type d'appareil électroménager afin d'économiser l'énergie électrique. Un système de roulement permet d'afficher des recommandations différentes à chaque consultation.

Enfin, quelque soit le type d'appareil concerné, la page contient une proposition qui peut être activée par l'utilisateur pour ajouter l'appareil évalué en tant que favori. Comme cela apparaît sur les figures 10 à 15, cette proposition est affichée dans la barre d'outils située dans la zone inférieure de la page récapitulative. Cette proposition permet à l'utilisateur d'enregistrer les données relatives à l'appareil dans une liste d'appareils favoris sauvegardée dans un espace mémoire du terminal. Cette liste d'appareils favoris pourra être utilisée ultérieurement par l'utilisateur afin de comparer les appareils entre eux à l'aide de la fonctionnalité « Mes appareils favoris ».

Lorsque l'utilisateur sélectionne la proposition « Ajouter l'appareil à mes favoris », l'application commande l'affichage sur l'écran du terminal d'une page pré-remplie (Figures 16A et 16B) récapitulant les caractéristiques de l'appareil électroménager, incluant notamment le type d'appareil, le nom du fabricant de l'appareil, l'identifiant du modèle de l'appareil, la catégorie d'efficacité énergétique de l'appareil (catégorie A à G), et la valeur de consommation énergétique de l'appareil.

La page récapitulative contient également des champs pouvant être complétés par l'utilisateur avec d'autres informations utiles, telles que le prix de l'appareil, le niveau de bruit généré par l'appareil en fonctionnement, la consommation de l'appareil en eau, le nom du vendeur, une photo de l'appareil, ainsi que d'éventuels commentaires.

Deuxième fonctionnalité : « Mes appareils favoris »

Cette fonctionnalité permet à l'utilisateur de comparer les appareils électroménagers enregistrés en tant que favoris dans la mémoire du terminal.

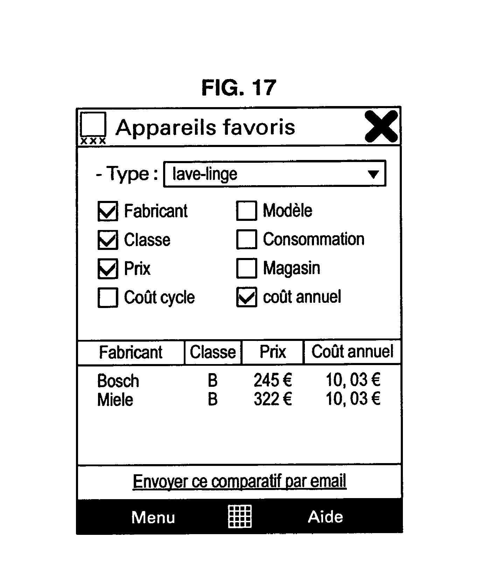

Lorsque l'utilisateur sélectionne la fonctionnalité « Mes appareils favoris », l'application d'évaluation commande l'affichage d'une page de comparaison représentée sur la figure 17.

La page de comparaison contient un menu déroulant permettant à l'utilisateur de sélectionner le type d'appareils qu'il souhaite comparer (réfrigérateur, four, lave-linge, lave-vaisselle, etc.)

La page de comparaison contient également une série de critères (fabricant, classe, prix, coût par cycle, modèle, consommation, vendeur, coût annuel) qui peuvent être sélectionnés par l'utilisateur pour comparer des appareils électroménagers de même type.

La page de comparaison contient enfin un tableau comparatif dans lequel sont mentionnées des informations correspondant aux critères sélectionnés par l'utilisateur pour chaque appareil électroménager de même type sauvegardé dans la liste de favoris. Plus précisément, le tableau comprend plusieurs lignes et plusieurs colonne, chaque ligne correspondant à un appareil favori, et chaque colonne correspondant à un critère sélectionné par l'utilisateur.

Le tableau permet à l'utilisateur de comparer de manière simple et directe les appareils favoris entre eux.

De plus, l'agencement de la page de comparaison proposé permet d'afficher un tableau comparatif en tenant compte des contraintes liées aux dimensions restreintes de l'écran.

Les critères correspondent aux entêtes des colonnes du tableau de comparaison. L'utilisateur peut afficher ou masquer des colonnes à sa guise en sélectionnant les critères qui l'intéresse. Seuls les critères sélectionnés par l'utilisateur apparaissent dans le tableau comparatif.

Afin de profiter des informations affichées avec un meilleur confort visuel, il serait également possible de proposer à l'utilisateur un envoi d'une page de comparaison vers une adresse email, afin de permettre à l'utilisateur de naviguer dans les appareils sauvegardés depuis un ordinateur.

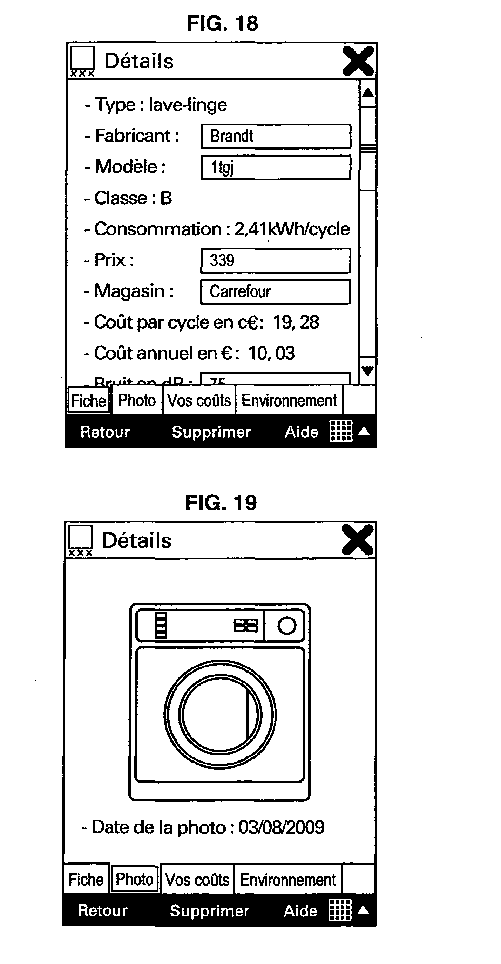

Lorsque l'utilisateur sélectionne un appareil dans la liste (en cliquant sur la touche matérielle correspondant à la validation d'un choix : touche au centre d'un pavé directionnel par exemple), l'application d'évaluation affiche une page d'informations détaillée concernant l'appareil (figures 18 à 21 ).

La page d'information contient quatre onglets intitulés :

- « Fiche »
- « Photo »
- « Vos coûts »
- « Environnement ».

L'onglet « Fiche » contient des informations récapitulant les caractéristiques de l'appareil électroménager (mêmes informations que figures 16A et 16B), incluant notamment le type d'appareil, le nom du fabricant de l'appareil, l'identifiant du modèle de l'appareil, la catégorie d'efficacité énergétique de l'appareil (catégorie A à G), et la valeur de consommation énergétique de l'appareil.

L'onglet « Photo » contient une photo de l'appareil prise par l'utilisateur.

Les onglets « Vos coûts » et « Environnement » contiennent des informations récapitulant les coûts associés à l'appareil (mêmes informations que figures 10 à 15).

Troisième fonctionnalité : « Calcul du coût de consommation électrique »

Cette fonctionnalité permet à l'utilisateur de saisir manuellement des informations figurant sur l'étiquette-énergie de l'appareil sans prendre une photo.

Grâce à cette fonctionnalité, il est possible de profiter du service d'évaluation sans qu'il soit nécessaire d'échanger des données avec le serveur distant. Cette fonctionnalité peut être utilisée lorsqu'une connexion à un réseau de communication n'est pas disponible, qu'il n'est pas possible de prendre une photo, ou que la reconnaissance OCR ne permet pas d'extraire des informations de l'étiquette.

Quatrième fonctionnalité : « Paramètres personnels »

Cette fonctionnalité permet à l'utilisateur d'entrer des données personnelles relatives à ses habitudes de consommation. Ces données sont utilisées par l'application d'évaluation pour calculer les coûts de consommation associés aux appareils électroménagers.

Lorsque l'utilisateur sélectionne la fonctionnalité « Paramètres personnels », l'application d'évaluation commande l'affichage d'une page pré-remplie représentée sur la figure 20.

La page pré-remplie contient des données personnelles relatives à l'option tarifaire souscrite par l'utilisateur auprès de l'opérateur d'énergie, le nombre de cycles de lave-linge par semaine, le nombre de cycles de sèche-linge par semaine, le nombre de cycle de lave-vaisselle par semaine, et une adresse email.

L'utilisateur peut modifier les paramètres affichés.

Au premier lancement de l'application d'évaluation, l'application commande l'affichage d'une page (Figure 21) dans laquelle il est demandé à l'utilisateur de renseigner des champs relatifs aux paramètres personnels.

L'application sauvegarde les paramètres personnels de l'utilisateur dans un fichier .xml enregistrés dans l'espace mémoire du terminal.

Traitement des données par le serveur distant

Dans le mode de réalisation proposé, le traitement des données d'image est exécuté par un serveur distant selon les étapes suivantes.

Selon une première étape, l'application de communication « script.php » charge les données d'image transmises par le terminal utilisateur dans la mémoire du serveur.

La photo d'une étiquette-énergie doit être prise en mode portrait. Si la photo a été prise en mode paysage (ce qui est le cas avec la majorité des téléphones mobiles), l'application de communication effectue une rotation des données d'image de 90° dans le sens des aiguilles d'une montre.

L'application « ocr.exe » de traitement des données incluse dans le serveur permet d'extraire à partir des données d'image, des informations contenues dans l'image par reconnaissance optique de caractères (OCR).

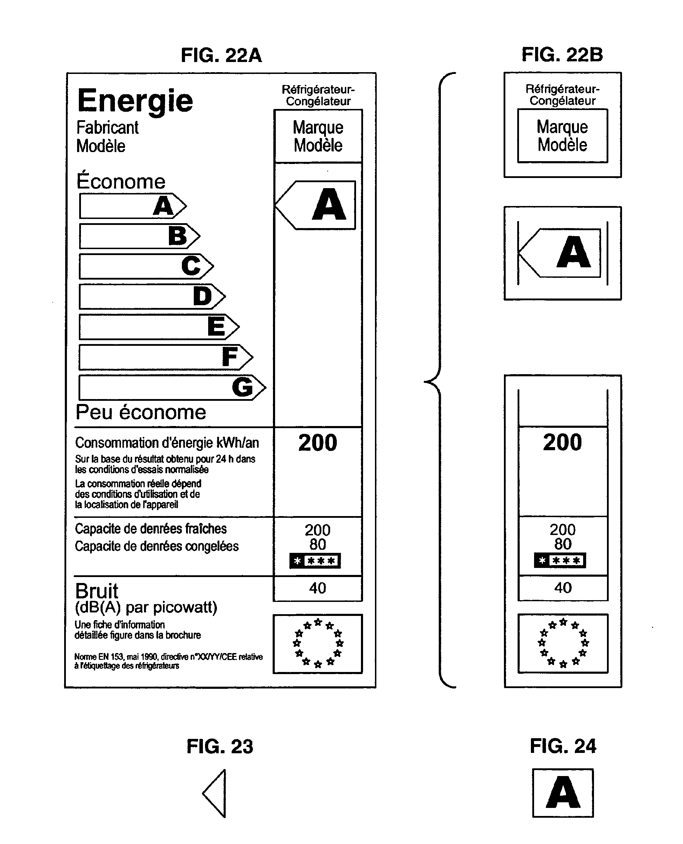

La figure 22A représente une étiquette-énergie comprenant typiquement quatre zones dans lesquelles figurent les informations suivantes :

- première zone : références de l'appareil, du modèle et du fabricant,
- deuxième zone : code couleur associé à une lettre (de A++ à G) indiquant une catégorie d'efficacité énergétique de l'appareil,
- troisième zone : consommation énergétique en kWh/an, efficacité et/ou capacité,
- quatrième zone : bruit en décibels.

Selon une deuxième étape, l'application de traitement recherche dans les données d'image la position de la flèche contenant la classe énergétique. La position de la flèche dans les données d'image constitue une position de référence pour localiser les zones de l'image à traiter contenant les valeurs recherchées. On peut en effet restreindre le traitement de reconnaissance de texte à la colonne d'informations de droite dans laquelle figure les données relatives à l'appareil.

La détection de la flèche utilise une fonction qui recherche dans les données d'image la meilleure correspondance entre une forme de référence et les données d'image. Autrement dit, la fonction compare une forme de référence avec les données d'image, et renvoie les coordonnées à laquelle la correspondance est la plus importante.

A cet effet, le serveur contient des formes de références incluant notamment des polices de caractères et une série d'images modèles enregistrées, telles que représentées sur les figures 10 et 11.

La figure 23 représente de manière schématique une première image modèle utilisée comme forme de référence par l'application de traitement. La première image modèle est une pointe de flèche. Cette forme de référence permet à l'application de traitement d'identifier la deuxième zone de l'étiquette.

La figure 24 représente de manière schématique une deuxième image modèle utilisée comme forme de référence par l'application de traitement. La deuxième image modèle est une lettre blanche sur un fond noir. Cette forme de référence permet à l'application de traitement d'identifier la catégorie d'efficacité énergétique de l'appareil figurant dans la deuxième zone de l'étiquette.

Selon une troisième étape, l'application de traitement élimine les données d'image correspondant à la partie de l'étiquette située à gauche du point correspondant à la pointe de la flèche.

L'application de traitement est ensuite apte à détecter les différentes parties de l'étiquette dans les données d'image restantes et à extraire des données nécessaires à l'évaluation de l'appareil.

La figure 22B illustre de manière schématique les parties détectées par l'application de traitement.

L'application de traitement extrait des données d'image des informations figurant sur l'étiquette-énergie, telles qu'un type d'appareil (réfrigérateur, four, lave-linge, lave-vaisselle, etc), un nom de fabricant de l'appareil, un identifiant du modèle de l'appareil, une catégorie d'efficacité énergétique de l'appareil (de A++ à G) et une valeur de consommation énergétique de l'appareil (en kWh/an).

Selon une quatrième étape, l'application de traitement génère un fichier texte « output.txt » contenant les données extraites sous un format pré-établi, tel que par exemple sous la forme d'une chaîne de valeurs agencées selon un ordre préétabli et séparées par un caractère de séparation :

Type*Fabricant*Catégorie*Consommation

Pour un réfrigérateur de marque X de classe B dont la consommation énergétique est de 250 kWh/an, on aura :

Réfrigérateur*X*B*250

Une erreur de reconnaissance peut être indiquée par une valeur « Erreur ». Par exemple, si le type d'appareil n'a pas été détecté, on aura :

Erreur*X*B*250

Selon une cinquième étape, l'application de communication transmet le fichier au terminal utilisateur.
Le format des données permet au terminal utilisateur d'identifier les différentes valeurs dans la chaîne de valeurs.

EVALUATION D'UN BATIMENT

Dans le cas d'un bâtiment, le procédé d'évaluation est identique au procédé d'évaluation d'un appareil électroménager, excepté que le serveur d'évaluation traite les données d'image pour en extraire des informations relatives au bâtiment et renvoie au terminal ces informations.

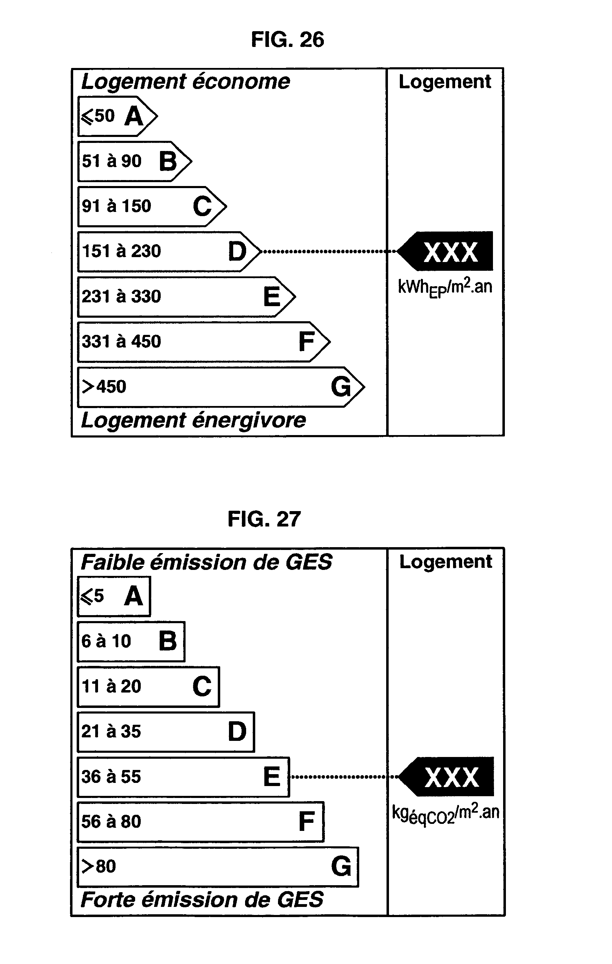

Les figures 26 et 27 illustrent de manière schématique une étiquette-énergie et une étiquette-climat associées à un bâtiment.
Parmi les informations renvoyées par le serveur au terminal utilisateur, figurent les informations suivantes :

- une catégorie d'efficacité énergétique du bâtiment (catégorie A à G),
- une valeur de consommation énergétique du bâtiment,
- une catégorie d'émission de gaz à effet de serre (catégorie A à G), et
- une valeur d'émission de gaz à effet de serre par le bâtiment.

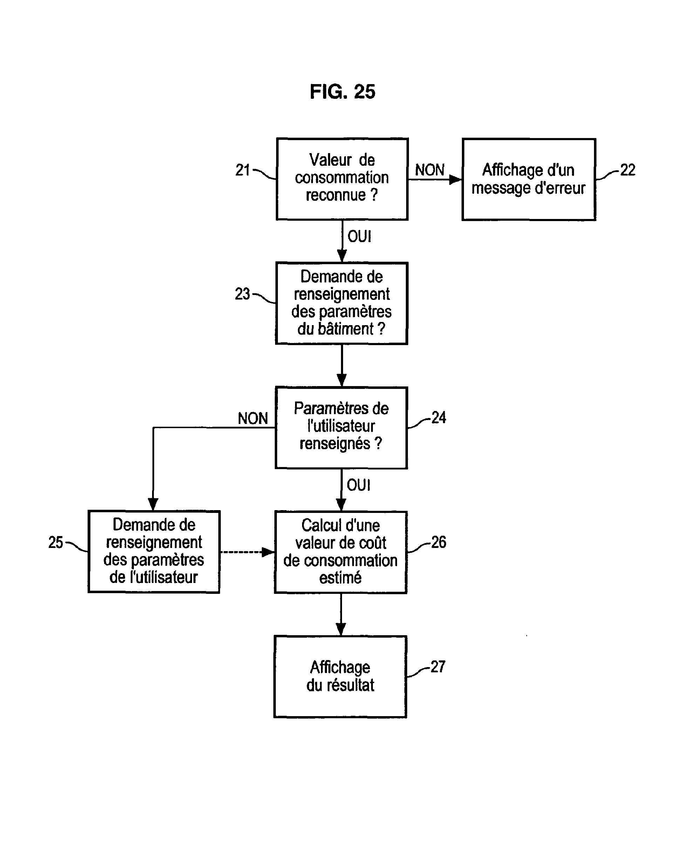

L'application d'évaluation applique alors aux informations reçues des étapes de traitement représentées sur la figure 25.
Selon une première étape 21, l'application détermine si une information de valeur de consommation énergétique du bâtiment figure dans le fichier.
Si ce n'est pas le cas, selon une deuxième étape 22, l'application commande l'affichage par le terminal d'un message d'erreur.
Sinon, selon une troisième étape 23, l'application demande à l'utilisateur de saisir manuellement des paramètres du bâtiment. Ces paramètres comprennent :

- le type de bâtiment (appartement, maison, etc),
- le nombre de pièces du bâtiment,
- la superficie du bâtiment.

Selon une quatrième étape 24, l'application détermine si des paramètres personnels de l'utilisateur ont été enregistrés dans le terminal.
Si ce n'est pas le cas, selon une cinquième étape 25, l'application demande à l'utilisateur de saisir des paramètres personnels, destinés à permettre de calculer la consommation de l'utilisateur.
Ces paramètres comprennent :

- le type d'abonnement auquel l'utilisateur a souscrit auprès d'un fournisseur d'énergie,
- des coordonnées de l'utilisateur (par exemple une adresse email),
- le tarif pris en compte pour le calcul d'évaluation (tarif de base ou tarif tenant compte des heures pleines et des heures creuses, ce tarif pouvant correspondre à l'abonnement auquel l'utilisateur a souscrit).

Si ces paramètres personnels ont déjà été renseignés, selon une sixième étape 26, l'application calcule une valeur estimée du coût de consommation énergétique du bâtiment. La valeur estimée dépend des informations extraites des données d'image (informations renvoyées par le serveur), des paramètres du bâtiment renseignés par l'utilisateur et des paramètres personnels de l'utilisateur.
Si le tarif auquel l'énergie est facturée à l'utilisateur est le tarif de base, l'application calcule un coût de consommation par an comme suit :

$$P = C \times p \times S$$

où P est le coût de consommation estimé par an en euros, C est la consommation par an par unité de surface, p est le prix de l'énergie et S est la surface du bâtiment.

Si le tarif auquel l'énergie est facturée à l'utilisateur tient compte des heures creuses et des heures pleines, l'application calcule un coût de consommation par an en considérant qu'une journée de 24 heures comporte 8 heures creuses et 16 heures pleines.

$$P = C \times \left( \frac{8}{24} \times p_1 + \frac{16}{24} \times p_2 \right) \times S$$

où P est le coût de consommation estimé par an en euros, C est la consommation par an par unité de surface, $P_1$ est le prix de l'énergie en heures creuses, $p_2$ est le prix de l'énergie en heures pleines et S est la surface du bâtiment.

L'application calcule également une estimation e d'une quantité de dioxyde de carbone ($CO_2$) émise par le bâtiment au cours d'une année.

e=C×$i$

où e est la quantité de $CO_2$ émise pour une période d'un an, C est la consommation par an, et S est la surface du bâtiment.

Selon une septième étape 27, l'application commande l'affichage sur l'écran du terminal d'une page récapitulative des données associées à l'appareil électroménager.

De même que dans le cas d'un appareil électroménager, l'utilisateur a la possibilité d'enregistrer les données relatives à un bâtiment dans la mémoire du terminal en sélectionnant la proposition « Ajouter le bâtiment à mes favoris » et de comparer entre eux des bâtiments enregistrés en tant que favoris dans la mémoire du terminal.

**Revendications**

1. Procédé d'évaluation d'un appareil ou d'un bâtiment destiné à être raccordé à un réseau de distribution d'énergie, à partir d'un terminal utilisateur, comprenant des étapes de :

   - générer une image associée à l'appareil ou au bâtiment à évaluer,
   - traiter l'image générée pour extraire des données relatives à l'appareil ou au bâtiment,
   - estimer une valeur de consommation énergétique de l'appareil ou du bâtiment, à partir d'une part des données extraites, et d'autre part de données personnelles associées à un abonné du réseau de distribution d'énergie, et
   - afficher sur un écran du terminal utilisateur la valeur de consommation estimée.

2. Procédé selon la revendication 1, dans lequel l'image associée à l'appareil ou au bâtiment est une image d'une étiquette associée à l'appareil ou au bâtiment et les données relatives à l'appareil ou au bâtiment sont les données figurant sur l'étiquette.

3. Procédé selon l'une des revendications qui précèdent, dans lequel le terminal utilisateur est un terminal mobile muni d'un dispositif de prise d'image, le procédé comprenant une étape de :

   - activer le dispositif de prise d'image du terminal mobile pour générer une image d'une étiquette associée à l'appareil ou au bâtiment.

4. Procédé selon l'une des revendications qui précèdent, dans lequel les données personnelles associées à l'abonné du réseau de distribution d'énergie comprennent un type d'abonnement auquel l'abonné a souscrit.

5. Procédé selon l'une des revendications qui précèdent, comprenant une étape de :

   - afficher simultanément sur un écran du terminal mobile des valeurs de consommation énergétique estimées pour plusieurs appareils ou plusieurs bâtiments.

6. Procédé selon la revendication 5, dans lequel l'étape d'affichage consiste à afficher une page de comparaison incluant un tableau présentant un ou plusieurs critères et une valeur de consommation énergétique associés à chaque appareil ou chaque bâtiment, chaque critère pouvant être sélectionné ou désélectionné par l'utilisateur pour être affiché ou masqué dans le tableau.

7. Procédé selon l'une des revendications 1 à 6, dans lequel les données extraites comprennent un type d'appareil, un nom de fabricant de l'appareil, un identifiant du modèle de l'appareil, une catégorie d'efficacité énergétique de l'appareil ou une valeur moyenne de consommation énergétique de l'appareil.

8. Procédé selon l'une des revendications 1 à 7, dans lequel les données personnelles associées à l'abonné du réseau de distribution d'énergie comprennent une fréquence d'utilisation de l'appareil.

9. Procédé selon l'une des revendications 1 à 8, dans lequel les données extraites comprennent une catégorie d'efficacité énergétique du bâtiment, une valeur de consommation énergétique du bâtiment, une catégorie d'émission de gaz à effet de serre et/ou une valeur d'émission de gaz à effet de serre par le bâtiment.

10. Procédé selon l'une des revendications 1 à 7 et 9, comprenant une étape selon laquelle l'utilisateur saisit une valeur de surface du bâtiment.

11. Procédé selon l'une des revendications 1 à 10, comprenant des étapes de :

 - estimer une quantité de dioxyde de carbone émise du fait du fonctionnement de l'appareil ou de l'occupation du bâtiment en fonction de la valeur de consommation énergétique de l'appareil ou du bâtiment,
 - afficher sur l'écran du terminal utilisateur la quantité estimée.

12. Procédé selon l'une des revendications 1 à 11, comprenant une étape de :

 - afficher sur l'écran du terminal utilisateur des informations recommandant un ou plusieurs appareil(s) présentant une consommation énergétique plus faible que la valeur de consommation énergétique de l'appareil évalué.

13. Application d'évaluation adaptée pour être chargée dans la mémoire d'un terminal mobile, pour la mise en oeuvre du procédé selon l'une des revendications 1 à 12, l'application étant apte à exécuter automatiquement des étapes de :

 - estimer une valeur de consommation énergétique d'un appareil ou d'un bâtiment destiné à être raccordé à un réseau de distribution d'énergie, à partir d'une part de données relatives à l'appareil ou au bâtiment, et d'autre part de données personnelles associées à un abonné du réseau de distribution d'énergie, et
 - afficher sur un écran du terminal mobile la valeur de consommation estimée.

14. Application selon la revendication 13, étant apte à exécuter automatiquement des étapes de :

 - transmettre à un serveur de traitement distant des données d'image représentatives d'une étiquette associée à l'appareil ou au bâtiment, et
 - recevoir de la part du serveur les données figurant sur l'étiquette.

15. Serveur d'évaluation pour la mise en oeuvre du procédé selon l'une des revendications 1 à 12, programmé pour exécuter automatiquement des étapes de :

 - recevoir de la part d'un terminal mobile des données d'image associée à un appareil ou au bâtiment destiné à être raccordé à un réseau de distribution d'énergie,
 - extraire à partir des données d'image des données relatives à l'appareil ou au bâtiment, et
 - renvoyer au terminal mobile les données extraites.

FIG. 1

Client mobile

Serveur

application

1. Photo de l'étiquette

2. Upload de la photo

8. Envoie des informations vers le mobile

script.php

ocr.exe

4. Appel de l'exécutable

6. Renvoie des informations

5. Lecture des informations de l'étiquette énergie

3. Stockage de la photo

photo.jpg

## FIG. 2

PRISE DE PHOTO
DE L'ÉTIQUETTE — 1

TRANSMISSION DE
LA PHOTO AU SERVEUR — 2

STOCKAGE DE
LA PHOTO — 3

LANCEMENT DE
L'APPLICATION OCR — 4

TRAITEMENT DE
RECONNAISSANCE
OCR DE LA PHOTO — 5

EXTRACTION DES
INFORMATIONS — 6

TRANSMISSION DES
INFORMATIONS VERS
LE TERMINAL MOBILE — 7

## FIG. 3

## FIG. 4

## FIG. 5

Menu principal

Prendre en photo une étiquette · Mes appareils favoris

Calcul du coût de consommation électrique · Paramètres personnels

## FIG. 6

Appareil photo

Appuyer sur l'icone pour démarrer l'appareil photo, et prendre l'étiquette énergie.

Menu · Aide

## FIG. 7

# Energie

Fabricant
le

nome

A

B

C

F

G

Peu économe

Lave-linge

X X X
WAS32720FF

A

mation d'énergie kWh/cyde
e du résultat obtenu pour le cyde blanc
s des conditions d'essais normalisée
mmation réelle dépend
des conditions d'utilisation et de
la localisation de l'appareil

1.36

| Efficacité de lavage | ABCDEFG |

## FIG. 8

Appareil photo
xxx

Upload de la photo en cours,
veuillez patienter.

Menu     Aide

## FIG. 9

11 — Valeur de consommation reconnue ?  →NON→  Affichage d'un message d'erreur —12

OUI

13 — Type d'appareil reconnu ?  NON

OUI

15 — NON ← Paramètres de l'utilisateur renseignés ?  ←---  Demande de renseignement du type d'appareil —14

OUI

16 — Demande de renseignement des paramètres de l'utilisateur  ---→  Calcul d'une valeur de coût de consommation estimé —17

Affichage du résultat —18

## FIG. 10

Résultat ☒

Ce lave-linge de classe [A]

consomme [1,51] kWh par cycle

Avec le tarif de [Base ▼]
le coût de consommation par cycle
est de : **12,08** centimes d'euros

Pour [3 ▼] cycle(s) par semaine

le coût de consommation est de :

**18,84** euros par [an ▼]

| Vos coûts | Environnement | Ecogestes | |

Menu   Ajouter   L'appareil   Aide   ▦ ▲

## FIG. 11

Résultat ☒

Privilégiez les heures creuses !

**10,03**€ en heures pleines *

**5,89**€ en heures creuses *

**9,90** kilos de CO2 **

Par [an ▼]
Pour [1 ▼] cycle(s) par semaine

_____

| Vos coûts | Environnement | Ecogestes | |

Menu   Ajouter   L'appareil   Aide   ▦ ▲

21

## FIG. 12

□ **Résultat** ✕

éco

geste

■ N'utilisez le lave-linge que s'il est plein ou utilisez la touche demi-charge.

■ Lavez votre linge à 40°C ou même à 30°C (économie de 30% par rapport à la lessive à 40°C), à moins qu'il ne soit contaminé ou excessivement sale : les enzimes seront plus efficaces et vous économiserez l'énergie.

| Vos coûts | Environnement | Ecogestes | |

**Menu   Ajouter   L'appareil   Aide** ▦ ▲

## FIG. 13

□ **Résultat** ✕

Ce réfrigérateur de classe $\boxed{A}$

consomme $\boxed{255}$ kWh par an

Avec le tarif $\boxed{\text{Base} \quad \blacktriangledown}$

le coût de consommation est de :

**20,40** euros par $\boxed{\text{an} \quad \blacktriangledown}$

Comparer le prix de l'appareil sur le web

| Vos coûts | Environnement | Ecogestes | |

**Menu   Ajouter   L'appareil   Aide** ▦ ▲

## FIG. 14

**☐ Résultat** ✖
xxx

**20,15** kilos de CO2 émis par an
par ce réfrigérateur*

_____

Le site Internet
www.guide-topten.com
met à votre disposition
une liste de laves-linge
recommandés par la WWF
pour leur faible consommation.

Vous déménagez ? Vous faites
des travaux ? Venez consulter
nos offres spécialisées et nos
recommandations pour économiser
de l'énergie dans votre habitation.

| Vos coûts | Environnement | Ecogestes | |

**Menu   Ajouter   L'appareil   Aide**  ▦ ▲

## FIG. 15

**☐ Résultat** ✖
xxx

éco
geste

■ Ne placez pas d'aliments chauds ou
tièdes dans le réfrigérateur.

■ Dégivrez régulièrement votre
réfrirérateur (ou congélateur) :
une couche de givre de seulement
trois millimètres augmente la
consommation de 30% .

■ Placez ces appareils de telle sorte
que les rayons de soleil ne tapent pas
dessus, mettez-les plutôt à l'ombre.

| Vos coûts | Environnement | Ecogestes | |

**Menu   Ajouter   L'appareil   Aide**  ▦ ▲

## FIG. 16A

- Type : lave-linge
- Fabricant :
- Modèle :
- Classe : B
- Consommation : 2,41kWh/cycle
- Prix en euros :
- Bruit en dB :
- Consommation d'eau en L :
- Magasin :
- Date de la photo : 03/08/2009

Retour          Valider          Aide

Fiche de l'appareil

## FIG. 16B

- Prix en euros :
- Bruit en dB :
- Consommation d'eau en L :
- Magasin :
- Date de la photo : 03/08/2009

Prendre une photo de l'appareil

- Commentaire :

Retour          Valider          Aide

Fiche de l'appareil

## FIG. 17

| Appareils favoris | ✕ |

- Type : | lave-linge ▼ |

☑ Fabricant  ☐ Modèle

☑ Classe  ☐ Consommation

☑ Prix  ☐ Magasin

☐ Coût cycle  ☑ coût annuel

| Fabricant | Classe | Prix | Coût annuel |
|---|---|---|---|
| Bosch | B | 245 € | 10, 03 € |
| Miele | B | 322 € | 10, 03 € |

Envoyer ce comparatif par email

| Menu | ▦ | Aide |

## FIG. 18

☐ Détails ✕
xxx

- Type : lave-linge
- Fabricant : | Brandt |
- Modèle : | 1tgj |
- Classe : B
- Consommation : 2,41kWh/cycle
- Prix : | 339 |
- Magasin : | Carrefour |
- Coût par cycle en c€: 19, 28
- Coût annuel en € : 10, 03
- Bruit en dB : | 75 |

| Fiche | Photo | Vos coûts | Environnement |

**Retour    Supprimer    Aide** ▲

## FIG. 19

☐ Détails ✕
xxx

- Date de la photo : 03/08/2009

| Fiche | Photo | Vos coûts | Environnement |

**Retour    Supprimer    Aide** ▲

## FIG. 20

☐ **Paramètres**                    ✖
xxx

- Option tarifaire souscrite :

| Base | ▼ |

- Nombre de cycles de lave-linge par semaine :    | 1 ▼ |

- Nombre de cycles de sèche-linge par semaine :    | 1 ▼ |

- Nombre de cycles de lave-vaissellepar semaine :    | 3 ▼ |

- Adresse email :

| untel@mail.com | ▼ |

**Menu**        ▦        **Aide**

## FIG. 21

☐ **Paramètres**                    ✖
xxx

C'est la première fois que vous prenez l'étiquette d'un lave-linge en photo.

Les paramètres suivants sont utilisés pour calculer votre consommation :

Vous faites en moyenne :        | 1 ▼ |
cycle(s) de lavage par semaine.

Quelle option tarifaire voulez-vous utiliser par défaut pour les calculs de consommation ?

| Base | ▼ |

**Retour**        **Valider**        **Aide** ▦ ▲

## FIG. 22A

# Energie

Fabricant
Modèle

### Économe

- **A**
- **B**
- **C**
- **D**
- **E**
- **F**
- **G**

## Peu économe

| | Réfrigérateur-Congélateur |
|---|---|
| | Marque Modèle |
| | **A** |
| **Consommation d'énergie kWh/an** Sur la base du résultat obtenu pour 24 h dans les conditions d'essais normalisée La consommation réelle dépend des conditions d'utilisation et de la localisation de l'appareil | **200** |
| Capacité de denrées fraîches Capacité de denrées congelées | 200 80 ✱✱✱✱ |
| **Bruit** (dB(A) par picowatt) Une fiche d'information détaillée figure dans la brochure Norme EN 153, mai 1990, directive n°XX/YY/CEE relative à l'étiquettage des réfrigérateurs | 40 ★★★ |

## FIG. 22B

Réfrigérateur-Congélateur

Marque
Modèle

**A**

**200**

200
80
✱✱✱✱

40

★★★

## FIG. 23

◁

## FIG. 24

**A**

# FIG. 25

21 — Valeur de consommation reconnue ?

→ NON → Affichage d'un message d'erreur — 22

↓ OUI

23 — Demande de renseignement des paramètres du bâtiment ?

↓

Paramètres de l'utilisateur renseignés ? — 24

NON ←

↓ OUI

25 — Demande de renseignement des paramètres de l'utilisateur

Calcul d'une valeur de coût de consommation estimé — 26

↓

Affichage du résultat — 27

## FIG. 26

| Logement économe | Logement |
|---|---|
| ≤50 **A** | |
| 51 à 90 **B** | |
| 91 à 150 **C** | |
| 151 à 230 **D** | **XXX** |
| 231 à 330 **E** | kWh$_{EP}$/m$^2$.an |
| 331 à 450 **F** | |
| >450 **G** | |
| Logement énergivore | |

## FIG. 27

| Faible émission de GES | Logement |
|---|---|
| ≤5 **A** | |
| 6 à 10 **B** | |
| 11 à 20 **C** | |
| 21 à 35 **D** | |
| 36 à 55 **E** | **XXX** |
| 56 à 80 **F** | kg$_{éqCO2}$/m$^2$.an |
| >80 **G** | |
| Forte émission de GES | |

Europäisches
Patentamt

European
Patent Office

Office européen
des brevets

**RAPPORT DE RECHERCHE EUROPEENNE**

Numéro de la demande

EP 11 15 2748

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 novembre 2007 (2007-11-01), pages 592-593, XP007905525, ISSN: 0170-9291 * La description et des dessins ayant été dûment considérés, l'objet revendiqué concerne des processus compris dans la liste des objets et activités exclus de la brevetabilité en vertu des dispositions de l'article 52(2) et (3) CBE. Il est indiqué à la demanderesse que, selon la pratique établie de l'OEB, aucune recherche n'est à effectuer pour ces aspects de l'invention telle que revendiquée. Les seuls aspects techniques identifiables de l'invention telle que revendiquée concernent l'utilisation de techniques informatiques conventionnelles afin de traiter des données de nature non-technique. Les techniques informatiques employées sont considérées être universellement connues car largement répandues et accessibles à tous à la date de dépôt / priorité de la demande ci-présente. La notoriété d'un tel art antérieur ne peut être raisonnablement contestée. Aucune preuve écrite n'est donc considérée nécessaire. Une note à cet | 1-15 | INV. G06Q10/00 G06Q30/00 |
| | | | DOMAINES TECHNIQUES RECHERCHES (IPC) |
| | | | G06Q |

Le présent rapport a été établi pour toutes les revendications

| Lieu de la recherche | Date d'achèvement de la recherche | Examinateur |
|---|---|---|
| La Haye | 14 mars 2011 | Nicoli, Félix |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 15 2748

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| | effet a été inclue dans le rapport de recherche. *<br><br>----- | | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 14 mars 2011 | Nicoli, Félix |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)